# FASCICULE DE BREVET EUROPEEN

(11) **EP 1 657 865 B1**
(45) Date de publication et mention de la délivrance du brevet: **01.10.2014**
(21) Numéro de dépôt: 05300858.7
(22) Date de dépôt: 26.10.2005
(51) Int. Cl.: H04L 12/70

(54) **Dispositif de signalement d'état de validité de messages de protocole de routage d'un réseau type IP**
Verfahren zum Anzeigen der Gültigkeit von Nachrichten eines Wegelenkungsprotokolls in einem IP Netzwerk
Method to signal the validity of routing protocol messages in an IP network

(30) Priorité: 10.11.2004 FR 0452596
(43) Date de publication de la demande: 17.05.2006
(73) Titulaire: ALCATEL LUCENT, 92100 Boulogne-Billancourt (FR)
(72) Inventeur: Marce, Olivier, 91300 Massy (FR); Galand, Damien, 92370 Chaville (FR)
(74) Mandataire: Sciaux, Edmond

(56) Documents cités:
- OLIVIER BONAVENTURE UCL STEFAAN DE CNODDER ALCATEL JEFFREY HAAS NEXTHOP BRUNO QUOITIN FUNDP RUSS WHITE CISCO: "Controlling the redistribution of BGP routes <draft-ietf-grow-bgp-redistribution-00.txt >" IETF STANDARD-WORKING-DRAFT, INTERNET ENGINEERING TASK FORCE, IETF, CH, vol. grow, avril 2003 (2003-04), XP015001907 ISSN: 0000-0004
- THOMAS LÉVY, OLIVIER MARCÉ, DAMIEN GALAND: "Embedded BGP Routing Monitoring" HSNMC 7TH IEEE INTERNATIONAL CONFERENCE,, 30 juin 2004 (2004-06-30), - 2 juillet 2004 (2004-07-02) pages 348-359, XP002332158
- VILLAMIZAR ANS R CHANDRA CISCO R GOVINDAN ISI C: "BGP Route Flap Damping" IETF STANDARD, INTERNET ENGINEERING TASK FORCE, IETF, CH, novembre 1998 (1998-11), XP015008223 ISSN: 0000-0003
- ERIC C ROSEN PETER PSENAK CISCO SYSTEMS ET AL: "Using an LSA Options Bit to Prevent Looping in BGP/MPLS IP VPNs draft-ietf-ospf-2547-dnbit-00.txt" IETF STANDARD-WORKING-DRAFT, INTERNET ENGINEERING TASK FORCE, IETF, CH, vol. ospf, juin 2003 (2003-06), XP015002930 ISSN: 0000-0004
- GRIFFIN T G ET AL: "AN ANALYSIS OF BGP CONVERGENCE PROPERTIES" COMPUTER COMMUNICATION REVIEW, ASSOCIATION FOR COMPUTING MACHINERY. NEW YORK, US, vol. 29, no. 4, octobre 1999 (1999-10), pages 277-288, XP000852205 ISSN: 0146-4833

## Description

L'invention concerne le domaine des réseaux de communication à protocole Internet (ou IP), et plus précisément le contrôle de la stabilité de tels réseaux.

Comme le sait l'homme de l'art, ce que l'on appelle traditionnellement le réseau Internet est un ensemble de systèmes autonomes (ou ASs pour « Autonomous Systems ») raccordés les uns aux autres par des routeurs IP et constitués chacun d'un ou plusieurs réseaux IP raccordés entre eux, également par des routeurs IP (ou passerelles).

Chaque système autonome (AS) est généralement placé sous le contrôle, notamment administratif, d'un unique opérateur Internet.

Pour que des paquets de données puissent parvenir à destination, ils doivent être routés conformément aux services qui ont été définis par les accords (ou SLAs) passés entre les utilisateurs qui les transmettent et leurs opérateurs. Pour que ces accords (SLAs) soient respectés, le réseau Internet doit présenter une grande stabilité, ce qui est particulièrement difficile compte tenu du fait que les réseaux IP et les systèmes autonomes qui le constituent évoluent en permanence et peuvent faire l'objet de dysfonctionnements.

Pour permettre l'obtention d'une certaine stabilité, les routeurs du réseau Internet doivent s'échanger constamment des informations de routage au moyen de protocoles de routage, tels que BGP (« Border Gateway Protocol » dont la version n°4 est définie par les normes RFC 1771 et 1772 de l'IETF).

Le document IETF standard-working-draft « controlling the redistribution of BGP routes" <draft-ietf-grow-bgp-redistribution-00.txt>, Bonanventure et al., IETF, CH, avril 2003, XP015001907 décrit un attribut appelé « redistribution community » pour le protocole BGP. Un routeur qui annonce une route par le protocole BGP introduit cet attribut dans le message d'annonce pour influencer la manière dont les routeurs destinataires du message vont redistribuer cette route. Un routeur BGP qui reçoit une route contenant un attribut « redistribution community » invalide ne tient pas compte des actions et des paramètres spécifiés dans cet attribut. L'attribut étant non transitif, un routeur le retire du message d'annonce de route avant de redistribuer ce message.

En outre, il est indispensable de collecter des informations de fonctionnement au sein des réseaux IP afin d'adapter leurs ressources en fonction des besoins et des circonstances, et de vérifier la cohérence des informations de routage échangées. Il existe pour ce faire des outils de contrôle de routage implantés, pour certains, dans les routeurs IP. Ces outils sont notamment capables de déterminer si les informations de routage, contenues dans des messages de protocole de routage reçus ou à transmettre, sont valides ou non, c'est-à-dire saines ou non. Or, quel que soit l'état de validité des informations de routage qui ont fait l'objet d'un ou plusieurs contrôles, elles sont transmises au(x) routeur(s) pair(s) destinataire(s), sans aucune distinction entre information valide, non valide, ou simplement non contrôlée. Des informations non valides (ou erronées) peuvent ainsi se propager dans tout ou partie du réseau Internet, sans distinction, nuisant à sa stabilité.

L'invention a donc pour but de remédier à cet inconvénient.

Elle propose à cet effet un dispositif de traitement de messages de protocole de routage, pour un routeur IP d'un réseau IP, comprenant des moyens de traitement chargés, d'une part, de déterminer si les informations de routage, qui sont contenues dans un message de protocole de routage à transmettre à au moins un routeur pair destinataire, ont fait l'objet d'au moins un contrôle par au moins un outil de contrôle de routage, ainsi que le résultat de chaque contrôle, et d'autre part, d'adjoindre à ce message de protocole de routage des informations d'état représentatives au moins du résultat de chaque contrôle effectué sur celui-ci, en vue de sa transmission au(x) routeur(s) pair(s) destinataire(s), conformément à la revendication 1.

Par exemple, les informations d'état peuvent être représentatives de chaque contrôle effectué sur les informations de routage contenues dans le message de protocole de routage à transmettre, et du résultat associé. Elles peuvent être également représentatives de chaque outil utilisé pour chaque contrôle effectué sur les informations de routage contenues dans un message de protocole de routage à transmettre.

Lorsque le(s) résultat(s) de(s) contrôle(s) signale(nt) la conformité de l'ensemble des informations de routage contenues dans un message de protocole de routage à transmettre, les moyens de traitement peuvent être chargés d'adjoindre au message des informations d'état représentatives d'un certificat de conformité des informations de routage qu'il contient.

Par ailleurs, les contrôles peuvent être de tout type, comme par exemple les contrôles de chemins entre systèmes autonomes (AS), ou les contrôles de politique de répartition de trafic, ou encore les contrôles d'optimalité d'agrégation de systèmes autonomes (AS).

Préférentiellement, les moyens de traitement du dispositif selon l'invention sont également chargés de réceptionner et de générer les messages de protocole de routage.

En outre, les moyens de traitement peuvent être chargés de traiter tous les types de messages de protocole de routage et notamment ceux qui se présentent sous la forme de messages de mise à jour d'informations de routage, comme par exemple ceux de type BGP.

Par ailleurs, les moyens de traitement peuvent être agencés, lorsque le(s) résultat(s) de contrôle(s) signale(nt) une non conformité des informations de routage contenues dans un message de protocole de routage à transmettre, à ne pas transmettre ce message.

L'invention propose également un routeur IP équipé d'un dispositif de traitement du type de celui présenté ci-avant.

Ce routeur peut également comprendre des moyens de contrôle comportant les outils de contrôle de routage et couplés au dispositif de traitement.

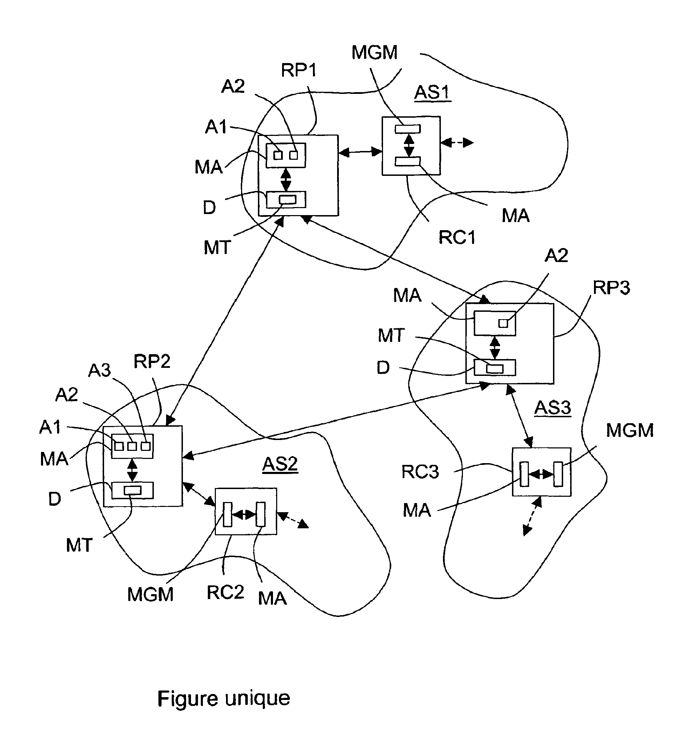

D'autres caractéristiques et avantages de l'invention apparaîtront à l'examen de la description détaillée ci-après, et du dessin annexé, sur lequel l'unique figure illustre de façon schématique une partie d'un exemple de réalisation d'un réseau Internet équipé de routeurs IP selon l'invention. Le dessin annexé pourra non seulement servir à compléter l'invention, mais aussi contribuer à sa définition, le cas échéant.

L'invention a pour objet de permettre le signalement aux routeurs d'un réseau Internet de l'état de validité des informations de routage contenues dans des messages de protocole de routage.

Comme indiqué dans la partie introductive, un réseau Internet peut, de façon schématique mais néanmoins suffisante à la compréhension de l'invention, être résumé à un ensemble de systèmes autonomes (ou « Autonomous Systems ») ASi interconnectés les uns aux autres par des routeurs IP dits « routeurs de bordure » ou « routeurs périphériques » RPi.

Dans l'exemple illustré sur l'unique figure, l'indice i est compris entre 1 et 3, mais il peut prendre n'importe quelle valeur supérieure ou égale à 1.

Par ailleurs, et bien que cela n'apparaisse pas sur la figure, chaque système autonome ASi est constitué d'un ou plusieurs réseaux de communication à protocole Internet (ou IP) raccordés entre eux par des routeurs périphériques IP et couplés à d'autres routeurs périphériques et de coeur RCi.

Classiquement, les différents routeurs RPi et RCi sont agencés pour générer et s'échanger des messages de protocole de routage contenant des informations de routage, comme par exemple les identifiants des routeurs qu'ils connaissent, les adresses qu'ils peuvent atteindre et les éventuelles métriques de coût associées, et les chemins inter systèmes autonomes (c'est-à-dire les routes définies par l'administrateur de réseaux en fonction des accords passés entre les différents opérateurs qui contrôlent les différents systèmes autonomes ASi).

On considère dans ce qui suit, à titre d'exemple non limitatif, que les routeurs utilisent le protocole de routage BGP (« Border Gateway Protocol »), et par exemple sa version n°4 qui est définie par les normes RFC 1771 et 1772 de l'IETF, pour s'échanger des messages de protocole de routage. Mais, l'invention concerne tout type de protocole de routage dit « inter domaine ». Dans ce qui suit on appellera « message BGP » un message de protocole de routage.

Chaque routeur RPi, RCi est équipé d'un module de gestion de messages BGP MGM qui, comme on le verra plus loin, constitue dans certains cas l'une des fonctionnalités d'un module de traitement MT. Chaque routeur RPi, RCi est également équipé d'un module de contrôle MA couplé à son module de gestion de messages BGP MGM et comprenant une ou plusieurs applications (ou outils) de routage Aj chargé(e)s d'effectuer des traitement de données et des contrôles de routage choisis, comme par exemple des contrôles des chemins entre systèmes autonomes (AS), ou des contrôles de politique de répartition de trafic (ou « load balancing policy »), ou des contrôles d'optimalité d'agrégation de préfixes, ou encore des contrôles d'absence de conditions d'instabilité. Tout type d'application de contrôle Aj peut être mis en oeuvre au niveau d'un module de contrôle MA.

Les applications (ou outils) de contrôle de routage Aj peuvent être implantées sur des systèmes extérieurs aux routeurs. Dans ce cas, le module de contrôle MA est remplacé par un module de communication qui transmet au module de contrôle extérieur les messages reçus et reçoit les résultats des applications de contrôles.

Comme cela est illustré sur l'unique figure, le nombre d'applications de contrôle de routage Aj, contenues dans un module de contrôle MA, peut varier d'un routeur à l'autre. Ainsi, le routeur RP1 comprend par exemple deux applications (ou outils) de contrôle de routage A1 et A2, le routeur RP2 comprend par exemple trois applications (ou outils) de contrôle de routage A1, A2 et A3, et le routeur RP3 comprend par exemple une application (ou outil) de contrôle de routage A2.

Le module de contrôle MA comporte par exemple des tables de routage et des tables BGP contenant notamment les informations de routage provenant des traitements et des contrôles effectués par ses applications Aj.

Chaque module de gestion MGM est chargé de communiquer aux applications Aj du module de contrôle MA associé les informations de routage qui sont contenues dans les messages BGP reçus par le routeur RPi, RCi dans lequel il est implanté, afin que lesdites applications puissent effectuer leurs contrôles et traitements respectifs et mettre à jour les tables de routage et les tables BGP.

Par ailleurs, chaque module de gestion MGM est chargé d'intégrer dans des messages BGP les informations de routage qui lui sont communiquées par le module de contrôle MA associé, afin qu'elles soient transmises à un ou plusieurs routeurs RPi, RCi destinataire(s).

Selon l'invention, au moins un des routeurs périphériques RPi, et de préférence tous les routeurs RPi et RCi du réseau Internet, comprend un dispositif de traitement D couplé au module d'analyse MA et comportant un module de traitement MT assurant la fonction de module de gestion MGM et chargé, chaque fois qu'il veut transmettre un message BGP à au moins un routeur pair destinataire RPi, RCi, de déterminer si les informations de routage qu'il contient ont fait l'objet d'au moins un contrôle par au moins une application (ou outil) de contrôle de routage Aj du module de contrôle MA, ainsi que le résultat de chaque contrôle.

A cet effet, le module de traitement MT peut interroger le module d'analyse MA pour déterminer auprès de ses applications Aj quels contrôles ont été effectués et les résultats de ceux-ci.

Une fois que le module de traitement MT dispose des informations relatives aux contrôles effectués sur des informations de routage d'un message BGP à transmettre, ainsi que de leurs résultats, il peut générer des informations d'état représentatives au moins du résultat de chaque contrôle effectué et destinées à être intégrées par le module de traitement MT dans ledit message BGP avant qu'il ne soit transmis au(x) routeur(s) pair(s) destinataire(s).

Ces informations d'état sont par exemple agencées sous la forme d'une structure de données que l'on peut par exemple intégrer dans le champ « option » du message BGP à transmettre, en particulier lorsque ce message BGP est un message de mise-à-jour.

Tout type d'informations d'état représentatives des résultats des contrôles peut être intégré dans un message BGP. Ainsi, il peut s'agir d'une information de validité ou de non validité désignant des informations de routage et éventuellement associée à chaque type de contrôle ayant permis d'obtenir cette information de validité et/ou à chaque application (ou outil) Aj utilisé(e). Mais, il peut également s'agir d'une espèce de certificat de conformité (ou non conformité) ou de validité (ou non validité) qui est généré par le module de traitement MT lorsque l'ensemble des résultats des différents contrôles signalent la conformité (ou la non conformité) d'une partie au moins des informations de routage qui sont contenues dans un message BGP à transmettre.

Lorsqu'un routeur RPi s'aperçoit que le (ou les) résultat(s) de contrôle(s) signale(nt) que des informations de routage, contenues dans un message de protocole de routage à transmettre, ne sont pas conformes, il peut être agencé de manière à ne pas transmettre ce message.

Lorsqu'un routeur RPi reçoit un message BGP contenant des informations de routage et des informations d'état, son module de traitement MT (qui assure la fonction de module de gestion MGM) les analyse et peut par exemple décider de ne transmettre au module de contrôle MA que les informations de routage valides.

Lorsque les informations d'état contenues dans un message BGP se résument à un certificat de non validité, le module de traitement MT peut être agencé de manière à ne pas transmettre au module de contrôle MA les informations de routage contenues dans ce message BGP.

Bien entendu, dans une variante valable dans les deux situations précitées, on peut envisager que le module de traitement MT transmette au module de contrôle MA les informations de routage et les informations d'état associées, contenues dans le message BGP reçu, afin que ledit module de contrôle MA décide lui-même de ce qu'il doit faire de ces informations de routage compte tenu des informations d'état associées.

Le dispositif de traitement D selon l'invention, et notamment son module de traitement MT, peut être réalisé sous la forme de circuits électroniques, de modules logiciels (ou informatiques), ou d'une combinaison de circuits et de logiciels.

L'invention ne se limite pas aux modes de réalisation de dispositif de traitement et de routeur IP décrits ci-avant, seulement à titre d'exemple, mais elle englobe toutes les variantes que pourra envisager l'homme de l'art dans le cadre des revendications ci-après.

## Revendications

1. Dispositif (D) de traitement de messages de protocole de routage pour un routeur (RPi) d'un réseau de communication à protocole Internet (IP), **caractérisé en ce qu'**il comprend des moyens de traitement (MT) agencés i) pour déterminer si des informations de routage, contenues dans un message de protocole de routage à transmettre à au moins un routeur pair destinataire (RPi'), ont fait l'objet d'au moins un contrôle de conformité par au moins un outil de contrôle de routage (Aj), et le résultat dudit ou de chaque contrôle de conformité, et ii) pour adjoindre audit message de protocole de routage des informations d'état représentatives dudit ou de chaque contrôle de conformité effectué sur lesdites informations de routage, et du résultat associé, en vue de sa transmission audit routeur pair destinataire (RPi').

2. Dispositif selon la revendication 1, **caractérisé en ce que** lesdites informations d'état sont représentatives de chaque outil (Aj) utilisé pour chaque contrôle de conformité effectué sur les informations de routage contenues dans un message de protocole de routage à transmettre.

3. Dispositif selon l'une des revendications 1 à 2, **caractérisé en ce que** lesdits moyens de traitement (MT) sont agencés, en cas de résultat(s) de contrôle(s) de conformité signalant une conformité ou une non conformité des informations de routage contenues dans un message de protocole de routage à transmettre, pour adjoindre à ce dernier des informations d'état représentatives d'un certificat de conformité ou de non conformité desdites informations de routage qu'il contient.

4. Dispositif selon l'une des revendications 1 à 3, **caractérisé en ce que** lesdits contrôles de conformité sont choisis dans un groupe comprenant au moins un contrôle de chemins entre systèmes autonomes, un contrôle de politique de répartition de trafic et un contrôle d'optimalité d'agrégation de systèmes autonomes.

5. Dispositif selon l'une des revendications 1 à 4, **caractérisé en ce que** lesdits moyens de traitement (MT) sont chargés de réceptionner et de générer lesdits messages de protocole de routage.

6. Dispositif selon l'une des revendications 1 à 5, **caractérisé en ce que** lesdits moyens de traitement (MT) sont agencés pour traiter des messages de protocole de routage se présentant sous la forme de messages de mise à jour d'informations de routage.

7. Dispositif selon l'une des revendications 1 à 6, **caractérisé en ce que** lesdits messages de protocole de routage sont de type BGP.

8. Dispositif selon l'une des revendications 1 à 7, **caractérisé en ce que** lesdits moyens de traitement (MT) sont agencés, en cas de résultat(s) de contrôle(s) de conformité signalant une non conformité des informations de routage contenues dans un message de protocole de routage à transmettre, à ne pas transmettre ledit message.

9. Routeur (RPi) pour un réseau de communication à protocole Internet (IP), **caractérisé en ce qu'**il comprend un dispositif (D) selon l'une des revendications précédentes.

10. Routeur selon la revendication 9, **caractérisé en ce qu'**il comprend des moyens de contrôle (MA) comportant lesdits outils de contrôle de routage (Aj) et couplés audit dispositif (D).

## Patentansprüche

1. Vorrichtung (D) zur Verarbeitung von Nachrichten eines Routing-Protokolls für einen Router (RPi) eines Internetprotokoll- bzw. IP-Kommunikationsnetzwerks, **dadurch gekennzeichnet, dass** sie Verarbeitungsmittel (MT) umfasst, welche dazu ausgelegt sind, i) zu ermitteln, ob an in einer an mindestens einen Ziel-Peer-Router (RPi') zu übertragenden Routing-Protokoll-Nachricht enthaltenen Routing-Informationen zumindest eine Übereinstimmungsprüfung durch mindestens ein Routing-Steuerungs-Tool (Aj) durchgeführt wurde, und das Ergebnis der besagten oder einer jeden Übereinstimmungsprüfung zu ermitteln, und ii) der besagten Routing-Protokoll-Nachricht Zustandsinformationen, welche für die besagte oder jede an den besagten Routing-Informationen durchgeführte Übereinstimmungsprüfung und für das zugehörige Ergebnis repräsentativ sind, im Hinblick auf deren Übertragung an den besagten Ziel-Peer-Router (RPi') beizufügen.

2. Vorrichtung nach Anspruch 1, **dadurch gekennzeichnet, dass** die besagten Zustandsinformationen für ein jedes der für jede an den in einer zu übertragenden Routing-Protokoll-Nachricht enthaltenen Routing-Informationen durchgeführte Übereinstimmungsprüfung eingesetzten Tools (Aj) repräsentativ sind.

3. Vorrichtung nach einem der Ansprüche 1 bis 2, **dadurch gekennzeichnet, dass** die besagten Verarbeitungsmittel (MT) dazu ausgelegt sind, wenn das Ergebnis/die Ergebnisse der Übereinstimmungsprüfung(en) eine Übereinstimmung oder eine Nichtübereinstimmung der in einer zu übertragenden Routing-Protokoll-Nachricht enthaltenen Routing-Informationen anzeigt/anzeigen, der besagten Routing-Protokoll-Nachricht Zustandsinformationen beizufügen, welche für ein Zertifikat der Übereinstimmung oder der Nichtübereinstimmung der besagten darin enthaltenen Routing-Informationen repräsentativ sind.

4. Vorrichtung nach einem der Ansprüche 1 bis 3, **dadurch gekennzeichnet, dass** die besagten Übereinstimmungsprüfungen in einer Gruppe, welche mindestens eine Prüfung der Pfade zwischen autonomen Systemen, eine Prüfung der Verteilung des Verkehrs und eine Prüfung der Optimalität der Aggregation von autonomen Systemen umfasst, gewählt werden.

5. Vorrichtung nach einem der Ansprüche 1 bis 4, **dadurch gekennzeichnet, dass** die besagten Verarbeitungsmittel (MT) die Aufgabe haben, die besagten Routing-Protokoll-Nachrichten in Empfang zu nehmen und zu erzeugen.

6. Vorrichtung nach einem der Ansprüche 1 bis 5, **dadurch gekennzeichnet, dass** die besagten Verarbeitungsmittel (MT) dazu ausgelegt sind, die in der Form von Routing-Informations-Aktualisierungsnachrichten eingehenden Routing-Protokoll-Nachrichten zu verarbeiten.

7. Vorrichtung nach einem der Ansprüche 1 bis 6, **dadurch gekennzeichnet, dass** die besagten Routing-Protokoll-Nachrichten vom Typ BGP sind.

8. Vorrichtung nach einem der Ansprüche 1 bis 7, **dadurch gekennzeichnet, dass** die besagten Verarbeitungsmittel (MT) dazu ausgelegt sind, die besagte Nachricht nicht zu übermitteln, wenn das Ergebnis/die Ergebnisse der Übereinstimmungsprüfung(en) eine Nichtübereinstimmung der in einer zu übertragenden Routing-Protokoll-Nachricht enthaltenen Routing-Informationen anzeigt/anzeigen.

9. Router (RPi) für ein Internetprotokoll- bzw. IP-Kommunikationsnetzwerk, **dadurch gekennzeichnet, dass** er eine Vorrichtung (D) gemäß einem der vorstehenden Ansprüche umfasst.

10. Router nach Anspruch 9, **dadurch gekennzeichnet, dass** er Steuermittel (MA), umfasst, welche die besagten Routing-Steuerungs-Tools (Aj) einschließen und an die besagte Vorrichtung (D) gekoppelt sind.

## Claims

1. A device (D) for processing routing protocol messages for a router (RPi) of an Internet protocol communication network (IP), **characterized in that** it comprises processing means (MT) arranged i) to determine whether routing information contained in a routing protocol message to be transmitted to at least one destination peer router (RPIi) has been subjected to at least one compliance test by at least one routing testing tool (Aj), and the result of said or each compliance test, and ii) to add to said routing protocol message status information representative of said or each compliance test conducted on said routing information, and the corresponding result, so that it can be transmitted to the destination peer router (RPIi)

2. A device according to claim 1, **characterized in that** said status information is representative of each tool (Aj) used for each compliance test conducted on said routing information contained in a routing protocol message to be transmitted.

3. A device according to one of the claims 1 to 2, **characterized in that** said processing means (MT) are arranged, in the event of one or more compliance test results indicating a compliance or non-compliance of the routing information contained in a routing protocol message to be transmitted, to add to that message status information representative of a certificate of compliance or non-compliance of said routing information that it contains.

4. A device according to one of the claims 1 to 3, **characterized in that** said compliance tests are chosen from a group comprising at least one path test between autonomous systems, a traffic distribution policy test, and a test of whether autonomous systems are optimally aggregated.

5. A device according to one of the claims 1 to 4, **characterized in that** said processing means (MT) are tasked with receiving and generating said routing protocol messages.

6. A device according to one of the claims 1 to 5, **characterized in that** said processing means (MT) are arranged to process routing protocol messages that appear in the form of routing information update messages.

7. A device according to one of the claims 1 to 6, **characterized in that** said routing protocol messages are of the BGP type.

8. A device according to one of the claims 1 to 7, **characterized in that** said processing means (MT) are arranged, in the event of one or more compliance test results indicating a non-compliance of the routing information contained in a routing protocol message to be transmitted, to not transmit said message.

9. A router (RPi) for an Internet protocol communication network (IP), **characterized in that** it comprises a device (D) according to one of the preceding claims.

10. A router according to claim 9, **characterized in that** it comprises means of testing (MA) comprising said routing testing tools (Aj) and coupled to said device (D).
